# EUROPEAN PATENT SPECIFICATION

(11) **EP 3 492 409 B1**
(45) Date of publication and mention of the grant of the patent: **21.10.2020**
(21) Application number: 17204669.0
(22) Date of filing: 30.11.2017
(51) Int. Cl.: B65G 45/20

(54) **SPRAY PAINTING SYSTEM AND METHOD OF OPERATION**
SPRITZLACKIERANLAGE UND VERFAHREN ZUM BETRIEB
SYSTÈME DE PEINTURE PAR PULVÉRISATION ET PROCÉDÉ DE FONCTIONNEMENT

(43) Date of publication of application: 05.06.2019
(73) Proprietor: Vestel Elektronik Sanayi ve Ticaret A.S., 45030 Manisa (TR)
(72) Inventor: KUYUCU, Ömer Gökçe, 45030 Manisa (TR)
(74) Representative: Peel, Katherine Jane

(56) References cited:
- WO-A1-2006/008621
- FR-A1- 2 350 284
- US-A- 3 888 345
- US-A- 5 669 974

## Description

### Technical Field

The present disclosure relates to a spray painting system and a method of operation of a spray painting system.

### Background

In spray paint application, a spray gun sprays paint through the air onto a substrate. The most common types of spray gun employ compressed air to atomize and direct the paint particles. Spray guns can be either automated or hand-held and have interchangeable heads to allow for different spray patterns.

Automated linear systems are often used for painting substrates such as wood, plastic and metal components. In linear spray systems, components are laid flat on a conveyor belt and then fed into a linear spray system, where automated spray guns are stationed above. When the substrate is directly below the guns, the spray guns begin to paint the substrate.

There are many types of spray guns with respect to their aim usage. However, approximately 60% of the paint reaches the substrate to be painted, with the reminder distributed into the surrounding environment. That is, there is approximately 40% inefficiency in the process. In addition, significant amounts of waste paint, which must be dealt with as contaminated waste, are produced. Automated flat linear spray systems usually incorporate a paint-saving system which recovers paint not applied to the substrate.

US3888345 discloses an endless conveyor belt cleaner in which a helical cleaning roller rotates in contact with a belt in the same direction as movement of the belt and at a peripheral speed in excess of the speed of movement of the belt.

US5669974 discloses a continuous spray coating apparatus and process generally comprises a housing defining a closed coating chamber, the coating chamber having inlet and outlet openings. The apparatus and method may also monitor the level of excess coating material within a reservoir formed in the bottom of the chamber, and actuate a coating material recirculation system which will return excess coating material to an external supply for reuse without exposure to the atmosphere outside the coating chamber.

### Summary

According to a first aspect disclosed herein, there is provided a spray painting system comprising a band arranged around a rotatable drive cylinder to cause linear movement of a substrate positioned on a surface of the band, at least one worm screw in contact with the surface of the band and configured to remove paint from the surface of the band, and a paint collection reservoir configured to receive paint removed from the surface of the band by the at least one worm screw, characterised by the paint collection reservoir comprising a sensor arranged to sense the level of paint in the paint collection reservoir and a controller, wherein the controller is configured to send control messages to adjust the rotation speed of the at least one worm screw in response to the sensed paint level.

The paint collection reservoir may be fluidly connected to a paint recovery container.

The sensor may be an infrared sensor.

The system may comprise two worm screws, each worm screw comprising an associated paint collection reservoir.

Each worm screw may be configured to rotate independently.

The system may comprise a balance sensor configured to detect the alignment of the band relative to the drive cylinder.

The controller may be configured to send control messages to at least one of the two worm screws to adjust at least one of rotation speed and rotation direction in response to the detected alignment.

According to a second aspect disclosed herein there is provided a method of operating a spray painting system comprising a band arranged around a rotatable drive cylinder to cause linear movement of a substrate positioned on a surface of the band, at least one worm screw arranged to remove paint from a surface of the band and a paint collection reservoir configured to receive paint removed from the surface of the band by the at least one worm screw, the method being characterised by sensing the paint level in the paint collection reservoir and sending a control message to change the rotation speed of the at least one worm screw in response to the paint level.

The method may comprise sending a control message to increase rotation speed if the paint level is above a first threshold.

The method may comprise sending a control message to decrease rotation speed if the paint level is below a second threshold, wherein the second threshold is lower than the first threshold.

The paint spraying apparatus may comprise two worm screws and the method may comprise sensing alignment of the band with respect to a drive cylinder and sending a control message to change at least one of the rotation speed and direction of at least one of the worm screws in response to the band alignment.

### Brief Description of the Drawings

To assist understanding of the present disclosure and to show how embodiments may be put into effect, reference is made by way of example to the accompanying drawings in which:
Figure 1 shows schematically a paint spraying system according to the prior art;
Figure 2 shows schematically a paint recovery scheme according to the prior art;
Figure 3 shows a schematic cross section of a paint spraying system according to an example;
Figure 4 shows a schematic cross section of a worm screw according to an example;
Figure 5 shows a top view of a paint spraying system according to an example;
Figure 6 shows an example control flow for adjusting paint recovery speed; and
Figure 7 shows an example control flow for aligning a conveyor belt with a drive cylinder

### Detailed Description

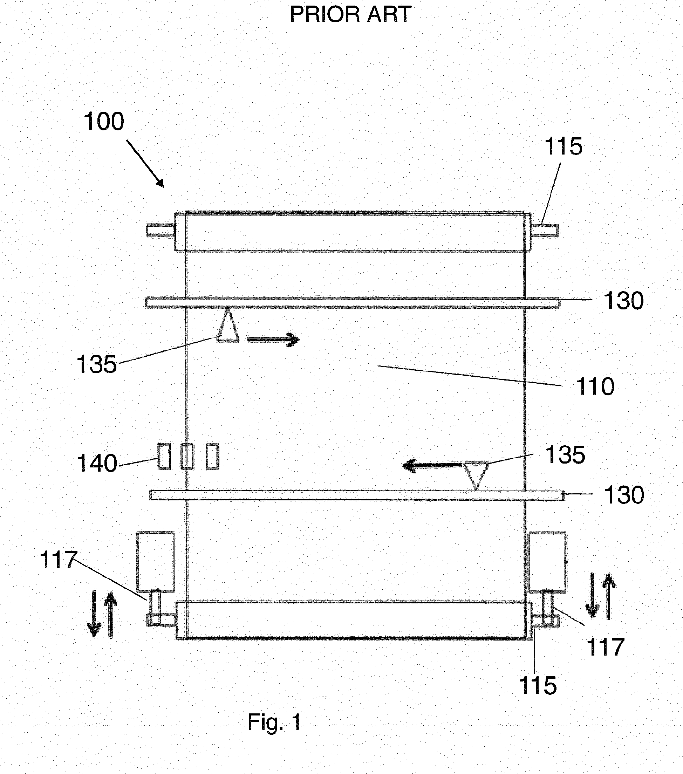

An example known paint spraying system 100 is shown in Figure 1. The paint spraying system comprises a conveyor belt or band 110. The conveyor belt 110 is driven by drive cylinders 115. A substrate can be positioned on the conveyor belt 110 and caused to move linearly by rotation of the drive cylinders 115. The system 100 further comprises supports 130 for spray guns 135. The spray guns 135 are movable along the supports 130 across the conveyor belt 110. The spray guns 135 are arranged to apply paint to the substrate as it is moved beneath them. The system 100 includes pistons 117 which are arranged to push drive cylinder 115 forward and backward to rebalance the conveyor belt 110 on the drive cylinder. Balance sensors 140 are used to detect the alignment of the conveyor belt 110 with respect to the drive cylinders 115 and provide the alignment to a controller which controls the piston movements. Balance sensor 140 may comprise a light reflective sensor. Balance sensors 140 monitor the movement of the conveyor belt 110 to the left or right (relative to the linear direction of travel of the belt.

However, the piston system is positioned underneath the spraying area. After a period of paint spraying, paint can reach the piston system and cause blockages. Due to the complex combination of components in a spray painting system, it is not straightforward to provide periodic cleaning of the piston system.

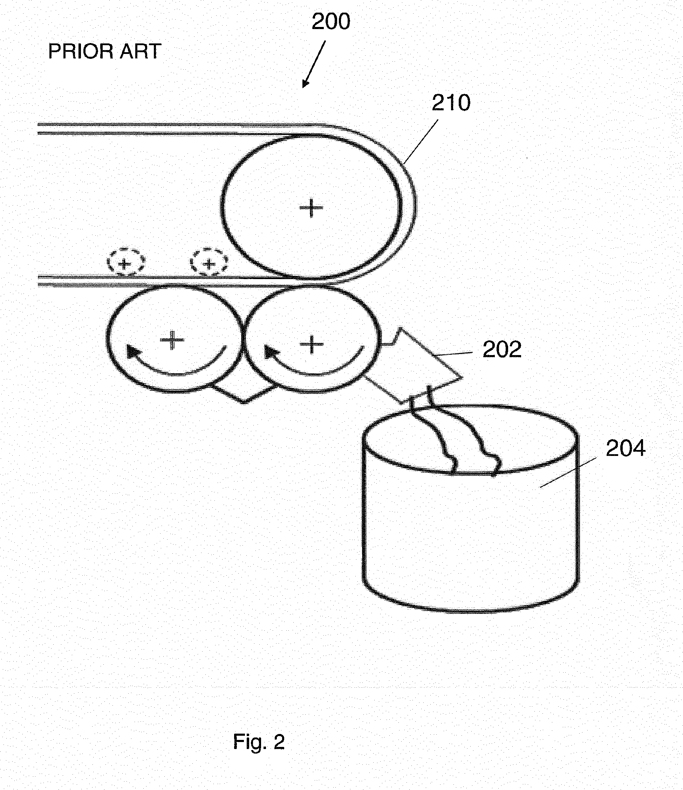

A known flat belt paint recovery system 200 is shown in Figure 2. A scraper 202 works against the movement of a conveyor belt 210 and scrapes paint from the conveyor belt 210 into a recovery tank 204. In the system 200 the scraper 202 comprises a blade. Different kinds of scraper can be used to remove the paint from conveyor belt 210. The scrapers may comprise, for example a stainless steel blades, as show in Figure 2, cylinders or gut type ropes.

Known paint recovery systems cannot react dynamically to painting speeds, amount and types. This may result in overflow of reclaim paint, leakage and defects in the belt surface due to high tension working.

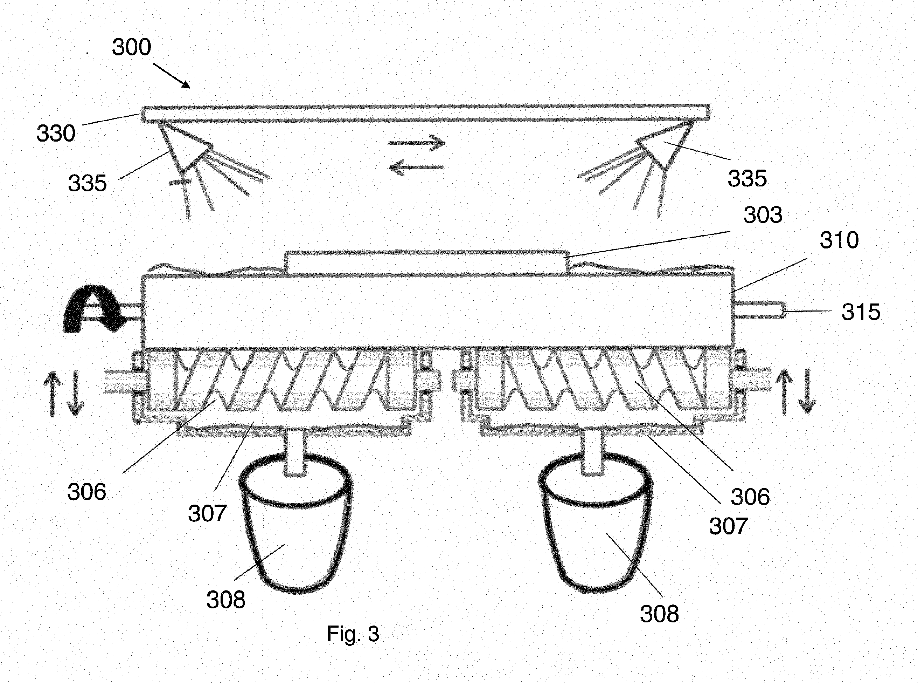

Figure 3 shows a cross section of a paint spraying system 300 in accordance with an example. The system comprises a conveyor belt 310 which is caused to move by a rotatable drive cylinder 315. A substrate 303 is positioned on the surface of the conveyor belt 310 below a support 330. The drive cylinder 315 rotates to cause continuous movement of the conveyor belt 310 to move the substrate 303 linearly under one or more paint spray guns 335.

The system 300 comprises two worm screws 306. The worm screws 306 are arranged to be in contact with the surface of the conveyor belt 310 and to remove paint from the surface of the conveyor belt 310. Each of the worm screws 306 is associated with a respective collection reservoir 307 positioned below the worm screw 306 relative to the conveyor belt 310. The collection reservoir 307 is arranged to receive the excess paint removed from the conveyor belt 310 by the respective worm screw 306. Each collection reservoir 307 is in fluid connection with a respective recovery container 308.

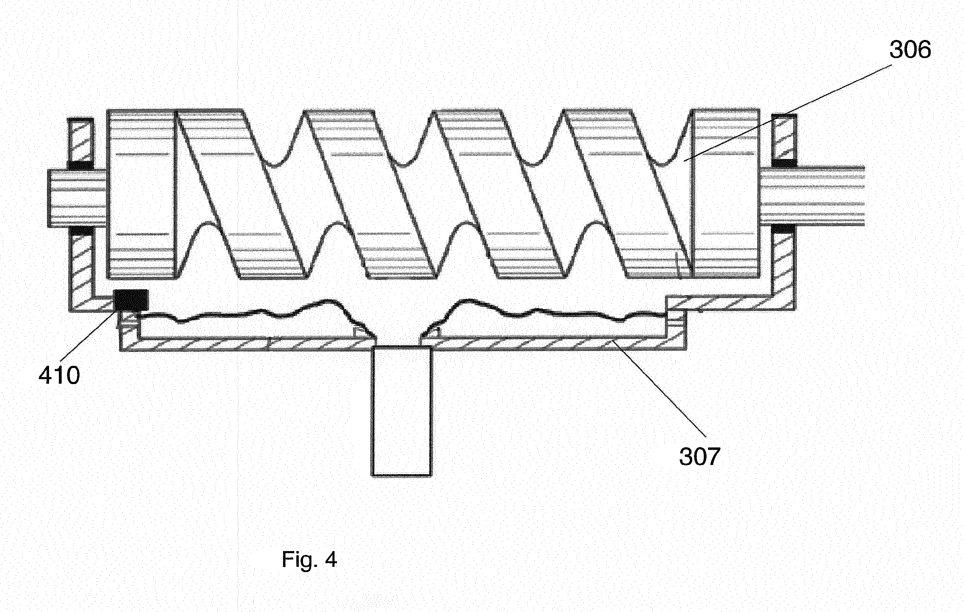

Figure 4 shows a more detailed schematic view of a worm screw 306 and its collection reservoir 307. The collection reservoir 307 is configured to receive excess paint which the worm screw 306 has removed from the conveyor belt 310. The excess paint can then flow into the recovery container 308 (not shown in Figure 4). The collection reservoir 307 comprises a sensor 410 which is configured to sense the level of paint in the collection reservoir 307 and provide an indication of the excess paint level to a controller (not shown, which may be one or more processors, etc.). The sensor 410 may be for example an infrared (IR) sensor.

The controller is configured to adjust the rotation speed of the worm screws 306 in response to the paint level detected at the sensor 410.The worm screws 306 may be controlled to rotate at the same speed. Alternatively, each worm screw 306 may be configured to rotate independently of the other. The rotation speed of each worm screw 306 may be controlled independently, depending on the paint level in their respective collection reservoirs.

If the paint level is above a first threshold value in the respective collection reservoir, that is the amount of paint in in the collection reservoir 307 is high, the controller sends a control message to the worm screws 306 to increase rotation speed from a standard working speed.

If the paint level falls below the first threshold value, the controller can send a control message to the worm screws 306 to reduce the rotation speed to a standard working speed. The chance of a leakage of paint due to an increased amount of paint is thus reduced.

If the level of paint is below a second threshold value, wherein the second threshold value is lower than the first threshold value, then the controller may provide a control message to the worm screws 306 to reduce the rotation speed below a standard working speed to reduce conveyor belt deformation.

In use, each worm screw 306 requires (at least practically) no additional cleaning, as it will effectively clean itself during operation.

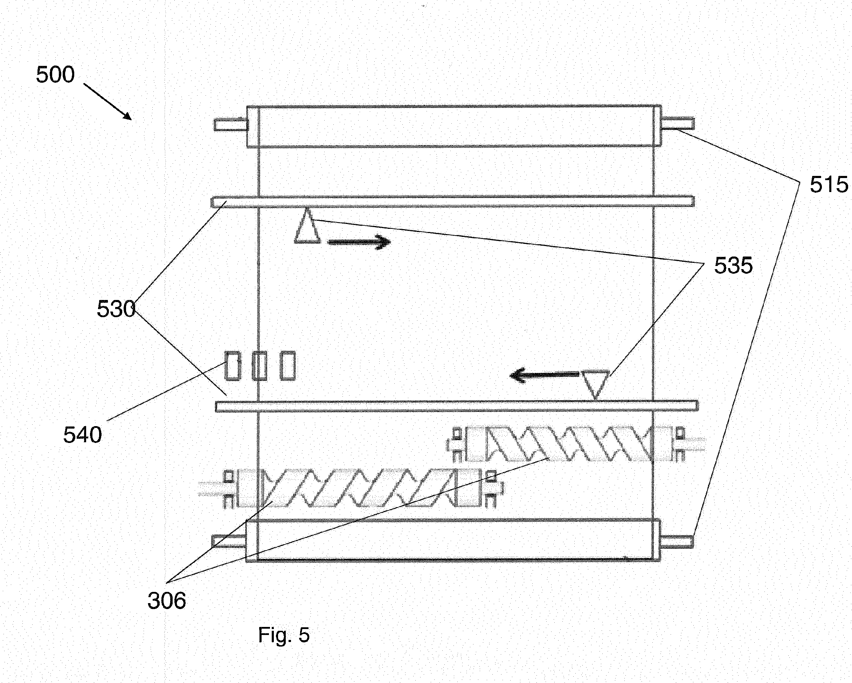

Figure 5 shows a top view of a paint spraying system 500 in accordance with embodiments. The system 500 comprises a conveyor belt 510 which is caused to move by drive cylinders 515. Supports 530 allow the paint spray guns 535 to move across the surface of the conveyor belt 510. Worm screws 306 as described with reference to Figures 3 and 4 are positioned below the conveyor belt 510, relative to the paint spray guns 535. The worm screws 306 are offset relative to each other relative to the linear direction of movement of the conveyor belt 510.

The system 500 includes one or more balance sensors 540. The balance sensor 540 may comprise a light reflective sensor. The balance sensors 540 provide a controller (not shown) with conveyor belt balance information, i.e. alignment of the conveyor belt 510 with respect to the drive cylinder 515. If the balance sensors 540 provide an indication that the conveyor belt 510 is unbalanced towards a first end of the drive cylinder 515, the controller provides a control message to the worm screw 306 at the opposing side to switch rotation direction to force the conveyor belt 510 to a balanced condition. The conveyor belt 510 is thus able to be balanced by the cleaning system, without the use of additional pistons and with no change to cleaning efficiency

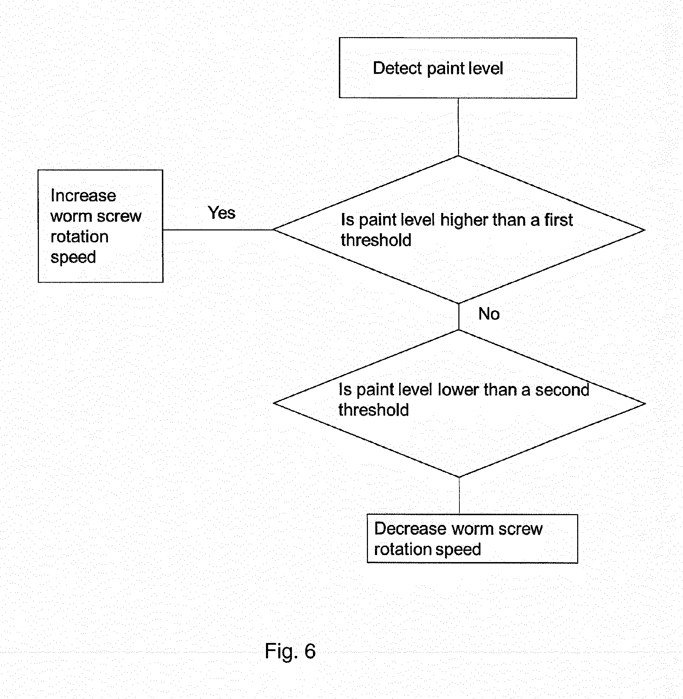

Figure 6 shows a control flow for adjusting the paint recovery speed. In a first step, the paint level is determined at the sensor 410 of the paint collection reservoir. If the paint level is higher than a first threshold value, a control message is sent to the worm screws 306 to increase rotation speed from a standard operating speed. If the paint level is lower than a second threshold value (wherein the second threshold value is lower than the first threshold value) a control message is sent to the worm screws 306 to reduce rotation speed below a standard operating speed.

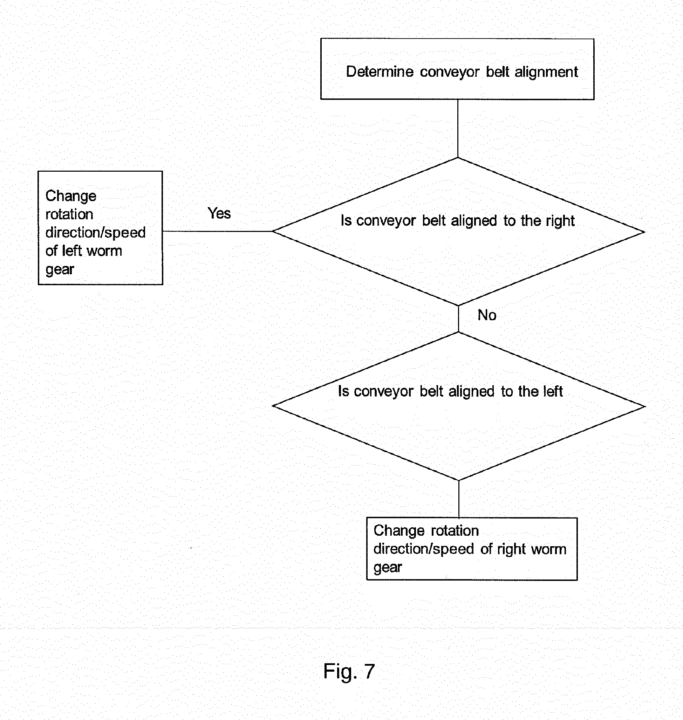

Figure 7 shows a control flow used to control conveyor belt balance. In a first step, alignment of a conveyor belt 510 relative to a drive cylinder 515 is detected at balance sensors 540. If the conveyor belt 510 is out of alignment towards a first end of the drive cylinder 515, a control message is sent to the worm screw 306 positioned on the opposing side to change rotation direction and/or rotation speed to cause the conveyor belt 510 to be re-aligned with respect to the drive cylinder 515.

A paint spraying system is thus provided which is configured to reclaim excess paint and react dynamically to reclaimed paint levels. In addition, balancing of the belt system by the paint reclaiming system can be performed.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A spray painting system (300) comprising:
a band (310) arranged around a rotatable drive cylinder (315) to cause linear movement of a substrate (303) positioned on a surface of the band (310);
at least one worm screw (306) in contact with the surface of the band (310) and configured to remove paint from the surface of the band (310); and
a paint collection reservoir (307) configured to receive paint removed from the surface of the band (310) by the at least one worm screw (306), **characterised by**:
the paint collection reservoir (307) comprising a sensor (410) arranged to sense the level of paint in the paint collection reservoir (307); and
a controller, wherein the controller is configured to send control messages to adjust the rotation speed of the at least one worm screw (306) in response to the sensed paint level.

2. A spray painting system according to claim 1, wherein the paint collection reservoir (307) is fluidly connected to a paint recovery container.

3. A spray painting system according to claim 1 or claim 2, wherein the sensor (410) is an infrared sensor.

4. A spray painting system according to any of claims 1 to 3, comprising two worm screws (306), each worm screw (306) comprising an associated paint collection reservoir (307).

5. A spray painting system according to claim 4, wherein each worm screw (306) is configured to rotate independently.

6. A spray painting system according to claim 4 or claim 5, comprising a balance sensor configured to detect the alignment of the band (310) relative to the drive cylinder (315).

7. A spray painting system according to claim 6, wherein the controller is configured to send control messages to at least one of the two worm screws (306) to adjust at least one of rotation speed and rotation direction in response to the detected alignment.

8. A method of operating a spray painting system comprising a band (310) arranged around a rotatable drive cylinder to cause linear movement of a substrate positioned on a surface of the band (310), at least one worm screw (306) arranged to remove paint from a surface of the band (310) and a paint collection reservoir (307) configured to receive paint removed from the surface of the band (310) by the at least one worm screw (306), the method being **characterised by**:
sensing the paint level in the paint collection reservoir (307); and
sending a control message to change the rotation speed of the at least one worm screw (306) in response to the paint level.

9. A method according to claim 8, comprising sending a control message to increase rotation speed if the paint level is above a first threshold.

10. A method according to claim 9, comprising sending a control message to decrease rotation speed if the paint level is below a second threshold, wherein the second threshold is lower than the first threshold.

11. A method according to any of claims 8 to 10, wherein the paint spraying apparatus comprises two worm screws (306), the method comprising:
sensing alignment of the band (310) with respect to a drive cylinder (315); and
sending a control message to change at least one of the rotation speed and direction of at least one of the worm screws (306) in response to the band alignment.

## Patentansprüche

1. Spritzlackiersystem (300), aufweisend:
ein Band (310), das um einen drehbaren Antriebszylinder (315) angeordnet ist, um eine lineare Bewegung eines auf einer Oberfläche des Bandes (310) positionierten Substrats (303) zu bewirken;
wenigstens eine Schneckenschraube (306) in Kontakt mit der Oberfläche des Bandes (310) und ausgestaltet, um Farbe von der Oberfläche des Bandes (310) zu entfernen; und
einen Farbsammelbehälter (307), der ausgestaltet ist, um von der Oberfläche des Bandes (310) durch die wenigstens eine Schneckenschraube (306) entfernte Farbe aufzunehmen,
**gekennzeichnet durch**
den Farbsammelbehälter (307), der einen Sensor (410) zum Erfassen des Farbpegels im Farbsammelbehälter (307) aufweist; und
eine Steuerung, wobei die Steuerung konfiguriert ist, um als Reaktion auf den erfassten Farbpegel Steuersignale zu senden, um die Drehzahl der wenigstens einen Schneckenschraube (306) anzupassen.

2. Spritzlackiersystem nach Anspruch 1, bei welchem der Farbsammelbehälter (307) fließend mit einem Farbrückgewinnungsbehälter verbunden ist.

3. Spritzlackiersystem nach Anspruch 1 oder Anspruch 2, bei welchem der Sensor (410) ein Infrarotsensor ist.

4. Spritzlackiersystem nach einem der Ansprüche 1 bis 3, aufweisend zwei Schneckenschrauben (306), wobei jede Schneckenschraube (306) einen zugehörigen Farbsammelbehälter (307) aufweist.

5. Spritzlackiersystem nach Anspruch 4, bei welchem jede Schneckenschraube (306) ausgestaltet ist, um sich unabhängig zu drehen.

6. Spritzlackiersystem nach Anspruch 4 oder Anspruch 5, aufweisend einen Balance-Sensor, der ausgestaltet ist, um die Ausrichtung des Bandes (310) relativ zum Antriebszylinder (315) zu erfassen.

7. Spritzlackiersystem nach Anspruch 6, bei welchem die Steuerung konfiguriert ist, um als Reaktion auf die erfasste Ausrichtung Steuersignale an wenigstens eine der zwei Schneckenschrauben (306) zu senden, um die Drehzahl und/oder die Drehrichtung anzupassen.

8. Verfahren zum Betreiben eines Spritzlackiersystems, das ein Band (310), das um einen drehbaren Antriebszylinder angeordnet ist, um eine lineare Bewegung eines auf einer Oberfläche des Bandes (310) positionierten Substrats zu bewirken, wenigstens eine Schneckenschraube (306) zum Entfernen von Farbe von einer Oberfläche des Bandes (310) und einen Farbsammelbehälter (307) zum Aufnehmen von von der Oberfläche des Bandes (310) durch die wenigstens eine Schneckenschraube (306) entfernter Farbe, wobei das Verfahren **gekennzeichnet ist durch**
Erfassen des Farbpegels im Farbsammelbehälter (307); und
Senden eines Steuersignals zum Ändern der Drehzahl der wenigstens einen Schneckenschraube (306) als Reaktion auf den Farbpegel.

9. Verfahren nach Anspruch 8, aufweisend ein Senden eines Steuersignals zum Erhöhen der Drehzahl, wenn der Farbpegel über einem ersten Schwellenwert liegt.

10. Verfahren nach Anspruch 9, aufweisend ein Senden eines Steuersignals zum Erniedrigen der Drehzahl, wenn der Farbpegel unter einem zweiten Schwellenwert liegt, wobei der zweite Schwellenwert niedriger als der erste Schwellenwert ist.

11. Verfahren nach einem der Ansprüche 8 bis 10, wobei die Farblackiervorrichtung zwei Schneckenschrauben (306) aufweist, wobei das Verfahren aufweist:
Erfassen einer Ausrichtung des Bandes (310) in Bezug auf einen Antriebszylinder (315); und
Senden eines Steuersignals zum Ändern der Drehzahl und/oder -richtung von wenigstens einer der Schneckenschrauben (306) als Reaktion auf die Bandausrichtung.

## Revendications

1. Système de peinture par pulvérisation (300) comprenant :
une bande (310) qui est disposée autour d'un cylindre d'entraînement rotatif (315) pour provoquer un mouvement linéaire d'un substrat (303) qui est positionné sur une surface de la bande(310) ;
au moins une vis sans fin (306) qui est en contact avec la surface de la bande (310) et configurée de manière à enlever de la peinture de la surface de la bande (310) ; et
un réservoir de collecte de peinture (307) qui est configuré de manière à recevoir de la peinture enlevée de la surface de la bande (310) par ladite au moins une vis sans fin (306),
**caractérisé en ce que** :
le réservoir de collecte de peinture (307) comprend un capteur (410) qui est disposé de manière à détecter le niveau de peinture dans le réservoir de collecte de peinture (307) ; et
un contrôleur, le contrôleur étant configuré de manière à envoyer des messages de commande pour régler la vitesse de rotation de ladite au moins une vis sans fin (306) en réponse au niveau de peinture détecté.

2. Système de peinture par pulvérisation selon la revendication 1, dans lequel le réservoir de collecte de peinture (307) est connecté de manière fluidique à un récipient de récupération de peinture.

3. Système de peinture par pulvérisation selon la revendication 1 ou 2, dans lequel le capteur (410) est un capteur infrarouge.

4. Système de peinture par pulvérisation selon l'une quelconque des revendications 1 à 3, comprenant deux vis sans fin (306), chaque vis sans fin (306) comprenant un réservoir de collecte de peinture associé (307).

5. Système de peinture par pulvérisation selon la revendication 4, dans lequel chaque vis sans fin (306) est configurée de manière à tourner de façon indépendante.

6. Système de peinture par pulvérisation selon la revendication 4 ou 5, comprenant un capteur d'équilibre qui est configuré de manière à détecter l'alignement de la bande (310) par rapport au cylindre d'entraînement (315).

7. Système de peinture par pulvérisation selon la revendication 6, dans lequel le contrôleur est configuré de manière à envoyer des messages de commande à au moins l'une des deux vis sans fin (306) pour régler au moins l'un parmi la vitesse de rotation et le sens de rotation en réponse à l'alignement détecté.

8. Procédé de fonctionnement d'un système de peinture par pulvérisation qui comprend une bande (310) qui est disposée autour d'un cylindre d'entraînement rotatif pour provoquer un mouvement linéaire d'un substrat qui est positionné sur une surface de la bande (310), au moins une vis sans fin (306) qui est disposée de manière à enlever de la peinture d'une surface de la bande (310), et un réservoir de collecte de peinture (307) qui est configuré de manière à recevoir de la peinture enlevée de la surface de la bande (310) par ladite au moins une vis sans fin (306), le procédé étant **caractérisé en ce qu'**il consiste à :
détecter le niveau de peinture dans le réservoir de collecte de peinture (307) ; et
envoyer un message de commande pour changer la vitesse de rotation de ladite au moins une vis sans fin (306) en réponse au niveau de peinture.

9. Procédé selon la revendication 8, consistant à envoyer un message de commande pour augmenter la vitesse de rotation si le niveau de peinture est supérieur à un premier seuil.

10. Procédé selon la revendication 9, consistant à envoyer un message de commande pour diminuer la vitesse de rotation si le niveau de peinture est inférieur à un deuxième seuil, le deuxième seuil étant inférieur au premier seuil.

11. Procédé selon l'une quelconque des revendications 8 à 10, dans lequel le système de peinture par pulvérisation comprend deux vis sans fin (306), le procédé consistant à :
détecter un alignement de la bande (310) par rapport à un cylindre d'entraînement (315) ; et
envoyer un message de commande pour changer au moins l'une parmi la vitesse de rotation et la direction d'au moins l'une des vis sans fin (306) en réponse à l'alignement de bande.
